# EUROPÄISCHE PATENTSCHRIFT

(11) **EP 2 536 268 B1**
(45) Veröffentlichungstag und Bekanntmachung des Hinweises auf die Patenterteilung: **15.10.2014**
(21) Anmeldenummer: 10798731.5
(22) Anmeldetag: 14.12.2010
(51) Int. Cl.: A01J 25/12

(54) **FORM- UND KÜHLVORRICHTUNG FÜR EINE FLIESSFÄHIGE, AUFGESCHMOLZENE LEBENSMITTELMASSE**
SHAPING AND COOLING DEVICE FOR A FLOWABLE, MELTED FOOD MASS
DISPOSITIF DE FORMAGE ET DE REFROIDISSEMENT POUR UNE COMPOSITION ALIMENTAIRE FONDUE ET COULANTE

(30) Priorität: 15.02.2010 DE 102010007984
(43) Veröffentlichungstag der Anmeldung: 26.12.2012
(73) Patentinhaber: Hochland SE, 88178 Heimenkirch/Allgäu (DE)
(72) Erfinder: BIGGEL, Andreas, 88145 Hergatz (DE); STADELMANN, Franz, 88145 Opfenbach (DE)
(74) Vertreter: Hoefer & Partner
(86) Internationale Anmeldenummer: PCT/EP2010/007617
(87) Internationale Veröffentlichungsnummer: WO 2011/098108

(56) Entgegenhaltungen:
- WO-A1-2005/000012
- JP-A- H10 277 624
- US-A- 4 004 870
- US-A- 4 696 779
- US-A1- 2002 027 309
- US-B1- 6 264 767

## Beschreibung

Die Erfindung bezieht sich auf eine Form- und Kühlvorrichtung für eine fließfähige, aufgeschmolzene Lebensmittelmasse gemäß dem Oberbegriff des Anspruches 1.

Im Einzelnen bezieht sich die Erfindung auf eine Form- und Kühlvorrichtung, so wie diese generell aus der DE 103 28 905 A1 vorbekannt ist.

Die DE 103 28 905 A1 zeigt eine Vorrichtung, wie in Fig. 1 dargestellt, bei welcher eine aufgeschmolzene Lebensmittelmasse 1, insbesondere eine Käseschmelze, zu einem kontinuierlichen Band 6 gewalzt und gekühlt wird. Hierzu weist die Vorrichtung zwei gegeneinander laufende, endlose Kühlbänder 2, 3 auf, welche jeweils über eine obere Umlenkwalze 4 und eine untere Umlenkwalze 5 geführt sind. Die beiden Kühlbänder 2, 3, welche bevorzugt als Stahlbänder ausgebildet sind, sind voneinander beabstandet, um das Band 6 aus der Lebensmittelmasse (Käseschmelze) zu formen.

Die dem Band 6 aus Lebensmittelmasse abgewandte Seite der Kühlbänder 2, 3 wird jeweils durch eine Kühlflüssigkeit 7 beaufschlagt, um die aufgeschmolzene Lebensmittelmasse abzukühlen.

Die Abkühlung der Lebensmittelmasse erfordert eine gleichmäßige Abkühlung und eine gute Ableitung der durch die Lebensmittelmasse eingebrachten Wärmemenge. Zudem ist es erforderlich, die Kühlflüssigkeit (Wasser) in sicherer Weise zuzuführen und abzuleiten.

Die WO 2005/000012 A1 beschreibt eine Form- und Kühlvorrichtung, bei welcher Kühlbänder auf der dem Lebensmittelband abgewandten Oberfläche mit Eiswasser bespritzt werden. Das Eiswasser wird über Führungsrinnen zugeführt. Es erfolgt somit ein nicht exakt kontrollierbares Bespritzen, bei welchem die Gefahr besteht, dass die aufzubringende Menge an Kühlflüssigkeit nicht exakt am lokal gewünschten Ort aufgebracht wird und dass Teile des Kühlwassers, bedingt durch das Bespritzen, ungenutzt ablaufen und/oder zu Hygieneproblemen führen können.

Die US 4 004 870 A zeigt Kühlbänder, welche von oben und von unten durch Sprühköpfe mit Kühlflüssigkeit besprüht werden. Das Kühlwasser läuft in nicht exakt bestimmbarer Weise ab, nachdem die Sprühstrahlen auf die Oberfläche des Bandes aufgetroffen und von diesem reflektiert wurden.

Aus der JP H10 277624 A ist eine Vorrichtung zum Kühlen eines horizontal verlaufenden Stahlbandes vorbekannt. Dabei werden aus horizontalen Zuleitungsrohren vertikal angeordnete Düsen mit Kühlwasser beaufschlagt. Aus den Düsen spritzt ein Kühlwasserstrahl auf die Oberfläche des Stahlbandes. Eine ähnliche Vorrichtung zeigt die US 6 264 767 B1.

Der Erfindung liegt die Aufgabe zugrunde, eine Vorrichtung der eingangs genannten Art zu schaffen, welche bei einfachem Aufbau und einfacher, kostengünstiger Herstellbarkeit eine zuverlässige Kühlung gewährleistet und sich durch ein hohes Maß an Betriebssicherheit auszeichnet.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit eine Form- und Kühlvorrichtung für eine fließfähige, aufgeschmolzene Lebensmittelmasse geschaffen, bei welcher am oberen Bereich des jeweiligen Kühlbandes ein rohrförmiger Zuführkanal angeordnet ist, welcher mit einer Vielzahl nebeneinander angeordneter Auslassröhren versehen ist. Die Auslassröhren sind so ausgebildet, dass sie eine laminare Schicht an Kühlflüssigkeit auf die Oberfläche des Kühlbandes auflegen. Hierzu sind die Auslassröhren mit einer zylindrischen Ausnehmung versehen, aus welcher sich ein laminarer Ausfluss der Kühlflüssigkeit ergibt. Erfindungsgemäß wird somit die Möglichkeit geschaffen, die Kühlflüssigkeit ohne Spritzgefahr aufzubringen und eine gleichmäßige Dicke und einen eine konstante Breite aufweisenden Film an Kühlflüssigkeit aufzubringen. Im Gegensatz zum Stand der Technik wird damit die Möglichkeit geschaffen, den Kühlfilm gleichmäßig hinsichtlich seiner Dicke und seiner Breite aufzulegen und damit einen optimierten Wärmeübergang zwischen der Oberfläche des Kühlbandes und dem bevorzugt turbulent fließenden Kühlflüssigkeitsfilm zu gewährleisten. Es ist somit nicht, wie teilweise beim Stand der Technik der Fall, zu befürchten, dass sich ein ungleichmäßig verteilter, turbulent abfließender und unterschiedlich dicker Kühlflüssigkeitsfilm bildet.

Durch die erfindungsgemäße Ausgestaltung ist es möglich, die Kühlung von beiden Seiten gleichmäßig durchzuführen. Auch dies ist im Hinblick auf eine gleichmäßige Abkühlung und eine zuverlässige Bildung des Bandes aus der Lebensmittelmasse vorteilhaft.

Erfindungsgemäß ist es besonders günstig, wenn der Zuführkanal ein Speichervolumen bildet. Hierdurch kann gewährleistet werden, dass der Austritt der Kühlflüssigkeit aus den Auslassröhren langsam, konstant und laminar erfolgt, während bei einem höheren Druck sowie bei ungünstigen Einströmverhältnissen eine turbulente Strömungsausbildung auch in dem Zuführkanal zu befürchten ist. Das erfindungsgemäß vorgesehene Speichervolumen, dessen Druck von beispielsweise 0,05 bar bis 0,3 bar betragen kann, sichert ein gleichmäßiges Ausfließen der Kühlflüssigkeit aus sämtlichen Auslassröhren, so dass sich auch über die gesamte Breite des Kühlbandes gleichbleibende Strömungsverhältnisse ergeben.

Erfindungsgemäß erfolgt die Ausgestaltung somit so, dass die Kühlwasserzuführung (Strömung) keine ungünstige Auswirkung auf die Ausströmung durch die Auslassröhren hat. Insbesondere beeinträchtigen dabei die Bewegungsenergie der einfließenden Strömung sowie die Druckverteilung nicht das Ausströmen durch die Auslassröhren.

Bevorzugterweise ist die Auslassröhre in einem Winkel zur Oberfläche des Kühlbandes angeordnet, beispielsweise in einem Winkel zwischen 40° und 60°. Hierdurch erfolgt ein besonders günstiges Auflegen des Kühlflüssigkeitsfilms.

Weiterhin ist es erfindungsgemäß günstig, dass eine Vielzahl von Auslassröhren vorgesehen ist, welche gleichmäßig über die gesamte Breite des Kühlbandes verteilt angeordnet sind. Hierdurch ergibt sich der gleichmäßige laminare Flüssigkeitsaustritt und die Ausbildung des gleichmäßigen, laminar abfließenden Kühlflüssigkeitsfilms.

Die Auslassröhren weisen bevorzugt ein Verhältnis von Länge zu Durchmesser von 5 bis 9 auf. Hierdurch ist eine gleichmäßige Durchströmung sichergestellt.

Um die Kühlflüssigkeit, die in Form des Kühlflüssigkeitsfilms abläuft, von der Oberfläche des Kühlbandes abzunehmen, ist es erfindungsgemäß besonders günstig, wenn unterhalb des Zuführkanals ein Ablaufelement zur Ableitung der Kühlflüssigkeit vorgesehen ist. Das Ablaufelement ist bevorzugterweise in Form einer Ablaufrinne ausgebildet, durch welche, bedingt durch das ausreichende Volumen der Ablaufrinne, die Kühlflüssigkeit spritzfrei und gleichmäßig abgeführt werden kann. Dabei erweist es sich als besonders günstig, wenn das Ablaufelement einen an der Innenseite des Kühlbandes anliegenden Schaber umfasst, welcher bevorzugterweise elastisch gegen die Oberfläche des Kühlbandes vorgespannt ist. Der Schaber nimmt somit in gleichmäßiger Weise den Kühlflüssigkeitsfilm ab. Der Schaber, die Steckverbindungen des Schabers sowie die Ablaufrinne sind im Verlauf des einlaufenden Kühlwassers glatt und ohne störende Bauteile (beispielsweise Schrauben) ausgestaltet, so dass das Kühlwasser ohne Spritzen in die Ablaufrinne einlaufen kann.

Um bei einem möglichen Verschleiß des Schabers diesen in einfacher Weise und mit geringem Aufwand austauschen zu können, ist es günstig, wenn der Schaber mittels einer Steckverbindung an dem Ablaufelement gelagert ist.

Die erfindungsgemäß vorgesehene Ableitung des Kühlflüssigkeitsfilms erfordert keine zusätzliche Fremdenergie, so wie dies beispielsweise beim Abpumpen erforderlich wäre. Weiterhin ist die Vorrichtung so ausgebildet, dass sich eine sehr geringe Geräuschentwicklung ergibt.

Ein weiterer, wesentlicher Vorteil der erfindungsgemäßen Vorrichtung besteht darin, dass der Schaber, bedingt durch seine Steckverbindung, schwimmend an dem Ablaufelement gelagert werden kann. Hierdurch ergeben sich keine Verformungen des Schabers durch eine Klemmvorrichtung oder Ähnliches oder durch Temperaturunterschiede, so dass sich keine Undichtigkeiten zwischen dem Schaber und der Oberfläche des Kühlbandes durch eine Verformung des Schabers (wellenförmige Verformung) ergeben können.

Weiterhin ist es vorteilhaft, dass die Ableitung der Kühlflüssigkeit durch Schwerkraft durch die Ablaufrinne erfolgt, so dass keine Komponenten vorgesehen werden müssen, welche störanfällig sind und ausfallen können.

In günstiger Weiterbildung der Erfindung ist vorgesehen, dass der Zuführkanal mit einer Einstellvorrichtung versehen ist, mittels derer eine Zuleitung von Kühlflüssigkeit zu einzelnen der Auslassröhren einstellbar ist. Durch die Einstellvorrichtung kann die wirksame Arbeitsbreite der Kühlvorrichtung eingestellt werden. Es ist möglich, insbesondere einzelne der außen liegenden Auslassröhren gegenüber der Zufuhr von Kühlflüssigkeit abzudichten, so dass die Kühlflüssigkeit nur aus einem mittleren Bereich der Kühlvorrichtung ausströmt. Der Auftrag der Kühlflüssigkeit (Kühlwasser) kann somit in der Breite von beiden Seiten symmetrisch und stufenlos eingestellt werden. Dabei ist es besonders günstig, wenn die Einstellvorrichtung zumindest einen innerhalb des Zuführkanals verschiebbaren Kolben umfasst. Bevorzugt sind zwei Kolben vorgesehen, um symmetrisch die in den außen liegenden Endbereichen vorgesehenen Auslassröhren gegen eine Zufuhr von Kühlflüssigkeit abzudichten. Durch diese Auslassröhren strömt somit keine Kühlflüssigkeit, diese wird vielmehr nur im mittleren Bereich durch die entsprechenden Auslassröhren ausgeleitet und dem Kühlband zugeführt.

Die Betätigung der Kolben erfolgt bevorzugt mittels eines Antriebs oder auch per Handkurbel, welcher beispielsweise eine Spindel umfasst, die über einen Servoantrieb betätigbar ist. Der Kolben wird dadurch innerhalb des Gehäuses des Zuführkanals verschoben, so dass Kühlflüssigkeit nur zu den zentrisch angeordneten Auslassröhren strömen kann, während die außerhalb des Kolbens positionierten Auslassröhren nicht mit Kühlflüssigkeit beaufschlagt werden. Hierdurch ergibt sich die Möglichkeit einer Einstellung, ohne dass die Gefahr eines Spritzens oder Tropfens auftritt. Die Spindel ist bevorzugter Weise mit einem gegenläufigen Gewinde versehen, um die beiden Kolben spiegelbildlich synchron zu bewegen.

In günstiger Weiterbildung der Erfindung ist vorgesehen, dass am seitlichen Endbereich des Zuführkanals jeweils eine Ablauföffnung vorgesehen ist, durch welche eine gewünschte Leckageströmung durch den Kolben abgeleitet wird. Diese Leckageströmung ist auch für eine CIP-Reinigung günstig, da es hierdurch möglich ist, den gesamten Verstellmechanismus zuverlässig zu reinigen.

Ein weiterer, wesentlicher Vorteil der erfindungsgemäßen Form- und Kühlvorrichtung besteht darin, dass diese leicht reinigbar ist. Es ergeben sich keine verdeckten Innenräume, vielmehr ist eine gleichmäßige Durchströmung mit Reinigungsfluid möglich, so dass insbesondere eine CIP-Reinigung (clean in place) erfolgen kann, bei welcher die Komponenten der erfindungsgemäßen Form- und Kühlvorrichtung für die Reinigung selbst mit verwendet werden können.

Im Folgenden wird die Erfindung anhand eines Ausführungsbeispiels in Verbindung mit der Zeichnung beschrieben. Dabei zeigt:
- Fig. 1: eine schematische Seiten-Schnittansicht gemäß dem Stand der Technik,
- Fig. 2: eine perspektivische Teilansicht, teils im Schnitt, eines Kühlbandes mit der erfindungsgemäßen Zuleitung und Ableitung von Kühlflüssigkeit,
- Fig. 3: eine vereinfachte Seitenansicht der in Fig. 2 dargestellten Anordnung,
- Fig. 4: eine vergrößerte Detailansicht des Details B gemäß Fig. 3,
- Fig. 5: eine vergrößerte Detailansicht des Details C von Fig. 3,
- Fig. 6: eine vereinfachte Vorderansicht, teils im Schnitt, der in den Fig. 2 bis 5 gezeigten Anordnung,
- Fig. 7: eine perspektivische Darstellung eines in der Arbeitsbreite verstellbaren Ausführungsbeispiels, und
- Fig. 8: eine vergrößerte, vereinfachte Schnittansicht gemäß dem Ausführungsbeispiel 7.

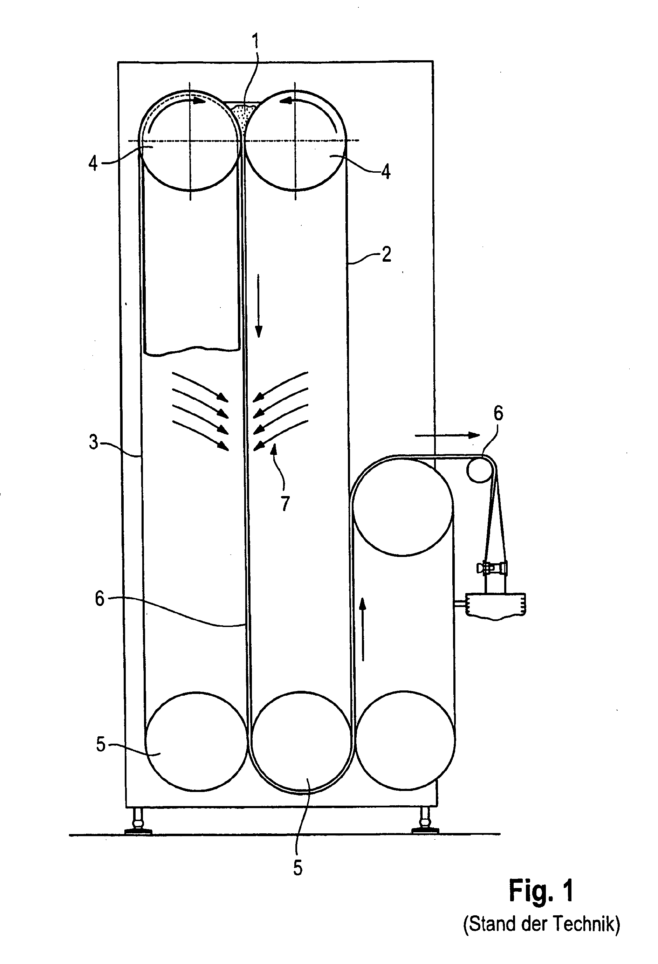

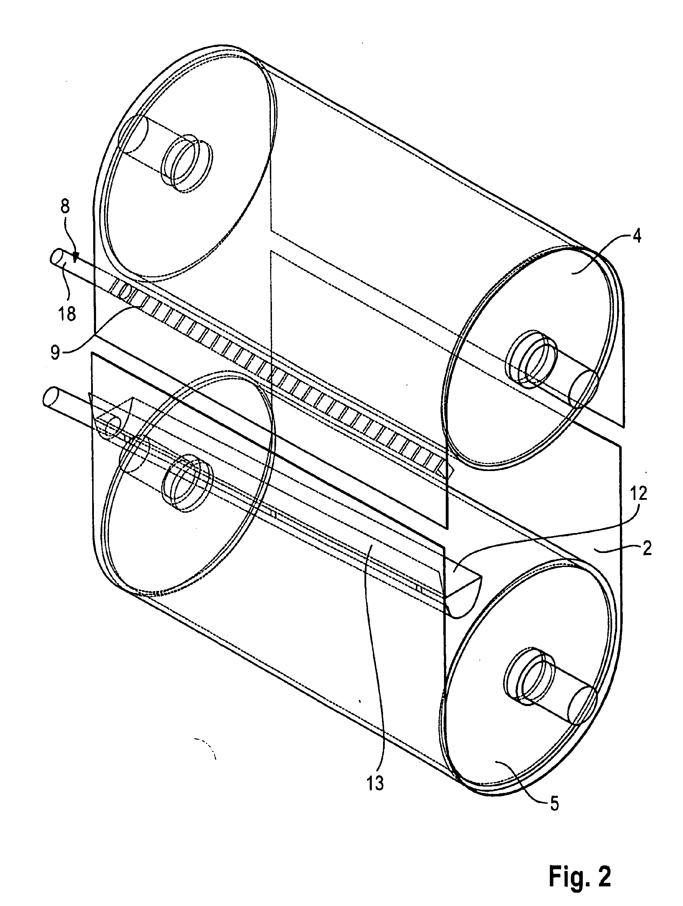

Die Fig. 2 bis 6 zeigen jeweils nur ein umlaufendes Kühlband 2, 3. So wie sich dies aus der Fig. 1 ergibt, sind jeweils zwei zusammenwirkende Kühlbänder 2, 3 vorgesehen, um den Spalt zwischen den beiden Kühlbändern 2, 3, in dem das Band 6 aus Lebensmittelmasse gebildet wird, gleichmäßig zu kühlen. Erfindungsgemäß kann die gesamte Anlage auch so ausgebildet sein, dass das Band 6 aus Lebensmittelmasse nur an einem umlaufenden Kühlband anliegt und somit in diesem Bereich kein zweites Kühlband erforderlich ist.

Die Fig. 2, 3 und 6 zeigen jeweils eine obere Umlenkwalze 4 und eine untere Umlenkwalze 5, um welche ein kontinuierliches Kühlband 2, beispielsweise aus Stahl, geführt ist. Das Kühlband verläuft, analog der Darstellung der Fig. 1, vertikal.

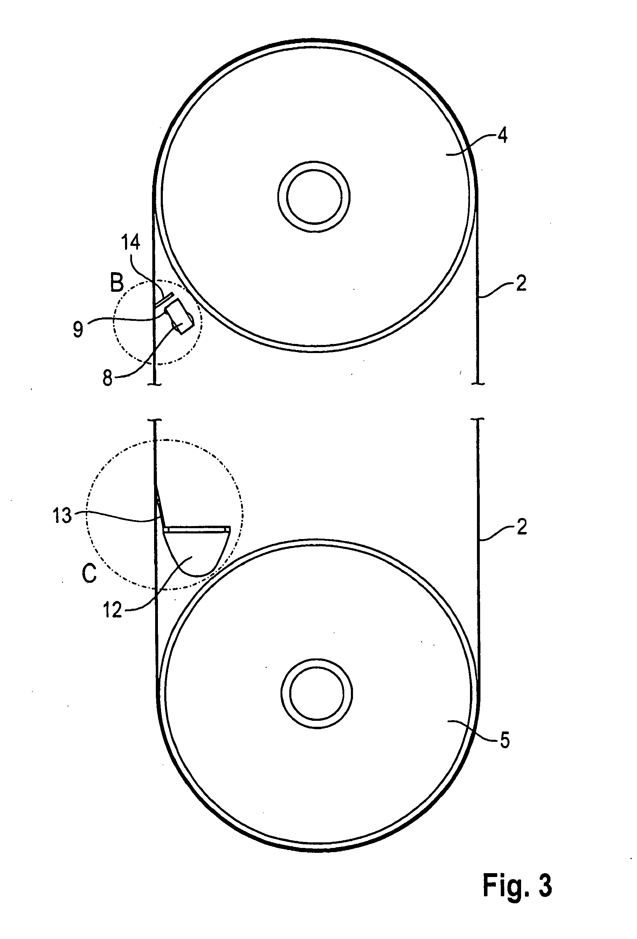

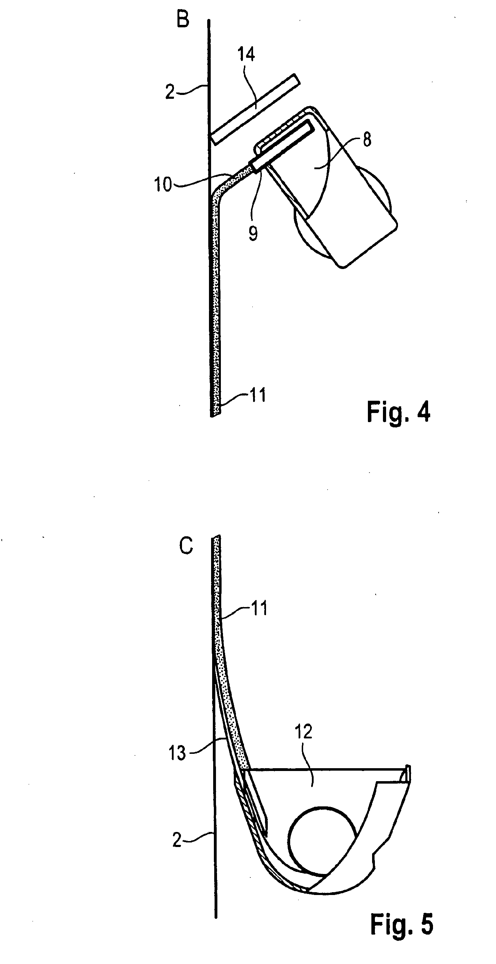

Erfindungsgemäß ist im oberen Bereich des Kühlbandes, so wie aus Fig. 3 ersichtlich, ein horizontal angeordneter rohrförmiger Zuführkanal 8, vorgesehen, welcher ein Speichervolumen bildet und an welchem eine Vielzahl von Auslassröhren 9 vorgesehen sind, so wie dies insbesondere die Fig. 3 und 4 zeigen. Die Auslassröhren 9 sind mit einer zylindrischen Ausnehmung versehen und so an dem rohrförmigen Zuführkanal 8 angeordnet, dass sich ein laminarer Kühlflüssigkeitsstrahl 10 ergibt (siehe Fig. 4), welcher einen laminaren Kühlflüssigkeitsfilm 11 erzeugt. Der laminare Kühlflüssigkeitsfilm 11 wird aus der Vielzahl nebeneinander angeordneter Auslassröhren 9 gebildet.

Bei dem gezeigten Ausführungsbeispiel erfolgt beispielsweise die Einbringung der geschmolzenen Lebensmittelmasse mit einer Temperatur zwischen 75°C und 85°C, während die Kühlflüssigkeit (Kühlwasser) eine Temperatur von beispielsweise 1°C aufweist. Am Austritt des Bandes 6 der Kühlmittelmasse aus den Kühlbändern 2, 3 ist diese beispielsweise auf eine Temperatur zwischen 5°C und 10°C abgekühlt worden.

Wie sich insbesondere aus Fig. 4 ergibt, spritzt der laminare Kühlflüssigkeitsstrahl 10 nicht, sondern legt sich glatt und gleichmäßig gegen die Oberfläche des Kühlbandes 2 an.

Die Auslassröhre 9 weist beispielsweise eine Länge zwischen 25 und 30 mm auf, sowie einen Innendurchmesser zwischen 3 und 4 mm. Insgesamt ist es vorteilhaft, wenn sich ein Verhältnis von Länge zu Durchmesser zwischen 5 und 9 ergibt.

Mittels der erfindungsgemäßen Vorrichtung ist es möglich, einen gleichmäßigen Kühlflüssigkeitsfilm 11 aufzubringen, der gleichmäßig abläuft, sich nicht oder nur unwesentlich seitlich ausbreitet und gut an der Oberfläche des Kühlbandes haftet. Somit können bei einer Kühlwandbreite von z.B. 1200 mm Kühlwassermengen zwischen 2 m³/h und 4 m³/h aufgebracht werden.

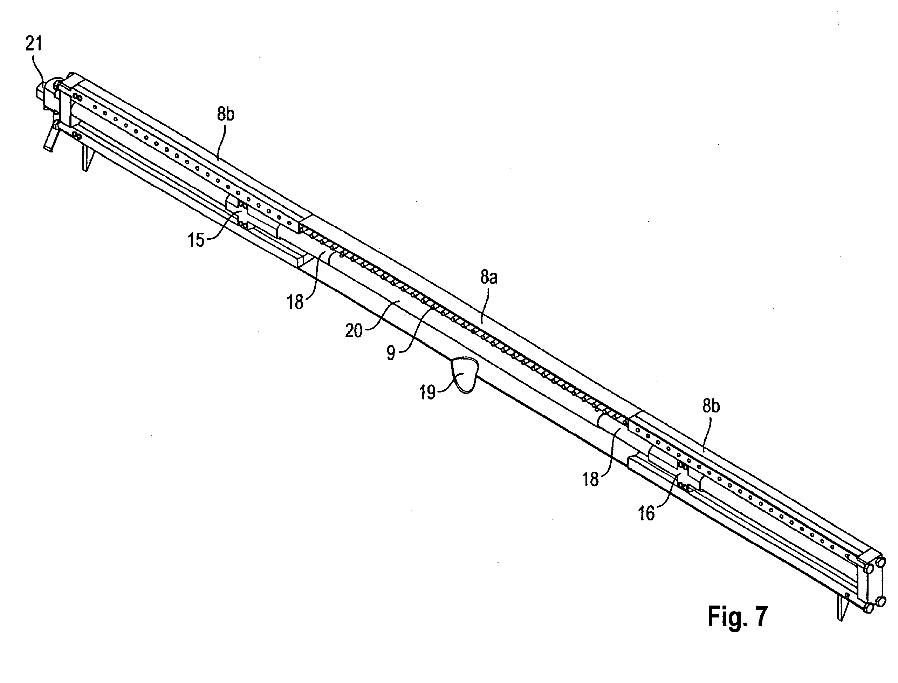

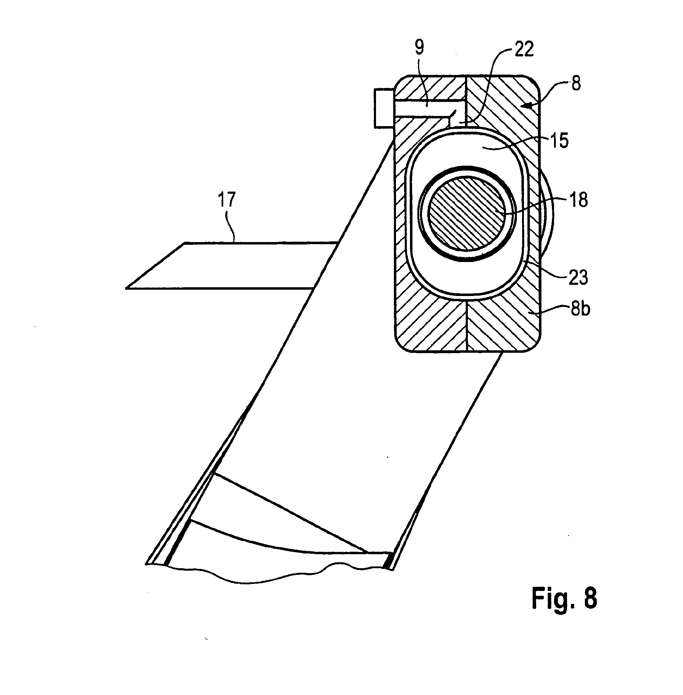

Die Fig. 7 und 8 zeigen ein weiteres Ausführungsbeispiel der Erfindung. Bei diesem Ausführungsbeispiel ist die Arbeitsbreite der erfindungsgemäßen Kühlvorrichtung einstellbar. Diese umfasst einen zentrischen Bereich des Abführkanals 8, welcher analog dem ersten Ausführungsbeispiel aufgebaut ist. Über ein im Einzelnen nicht dargestelltes Anschlussrohr 18 wird Kühlflüssigkeit mittig zugeführt. Angrenzend an den mittigen Bereich des Zuführkanals 8a sind seitliche Zuführkanäle 8b ausgebildet. Diese sind bevorzugterweise, wie aus Fig. 8 ersichtlich, als zweiteiliges Gehäuse ausgebildet. In diesem Gehäuse sind verschiebbar Kolben 15, 16 gelagert, welche über Spindeln 18 verschoben werden können. Hierzu sind die Spindeln 18 mit gegenläufigen Gewinden versehen (nicht dargestellt) und in einem Spindelgehäuse 20 geführt. Mittels eines Antriebsanschlusses 21 ist ein Anschluss an einen Servoantrieb möglich. Bei einer Drehung der Spindeln 18 erfolgt somit eine Linearverschiebung der Kolben 15, 16.

Wie die Fig. 8 zeigt, ist der Zuführkanal 8 mit einer Längs-Ausnehmung 23 versehen. Von dieser zweigen einzelne Bohrungen 22 ab, welche Kühlflüssigkeit zu den Auslassröhren 9 führen. Aus der Darstellung der Fig. 7 ergibt sich, dass durch die Dichtwirkung des Kolbens 15 bzw. 16 die seitlich außerhalb der Kolben 15, 16 liegenden Bohrungen 22 und damit die Auslassröhren 9 nicht mit Kühlflüssigkeit beaufschlagt werden können.

Um eine Reinigung der gesamten Vorrichtung zu ermöglichen, ist eine Leckageströmung durch die Kolben 15, 16 möglich. Leckageflüssigkeit wird seitlich in Ablauföffnungen 17 (vorstehende Röhren) zugeleitet und läuft seitlich auf die Oberfläche des jeweiligen Kühlbandes.

Durch Drehen der Spindel mit den gegenläufigen Gewinden an beiden Enden werden somit die Kolben 15, 16 bewegt. Durch die nicht-runde Ausgestaltung der Kolben 15, 16 wird verhindert, dass sich diese dabei drehen. Vielmehr werden die Kolben lediglich verschoben.

Wie die Fig. 4 zeigt, kann oberhalb des rohrförmige Zuführkanals 8 ein zusätzlicher Schaber 14 vorgesehen sein, um gegebenenfalls anhaftende Flüssigkeitsbereiche von der Oberfläche des Kühlbandes zu entfernen, bevor die Aufbringung des Kühlflüssigkeitsfilms 11 erfolgt. Dies kann insbesondere bei Kühlbändern sachdienlich sein, die nach oben laufen. Die Abstreifer (Schaber) oberhalb der Auftragerohre an den nach oben laufenden Kühlbändern haben den Zweck, nach oben mitgeschleppte Kühlflüssigkeit abzustreifen, bevor diese auf die obere Walze trifft und diese damit tropft.

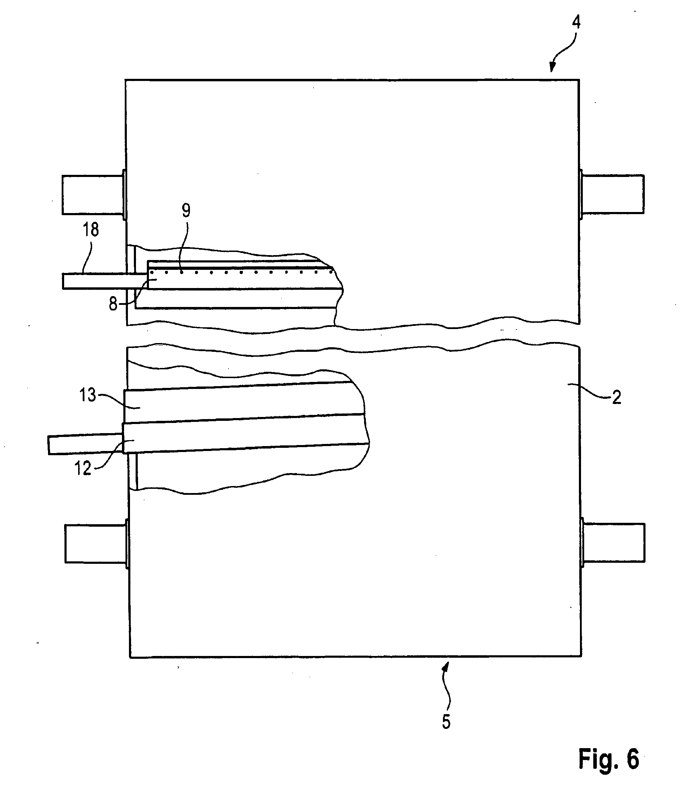

Die Ableitung der Kühlflüssigkeit erfolgt erfindungsgemäß mittels eines Ablaufelements 12, welches in Form einer geneigt angeordneten (siehe Fig. 6) Ablaufrinne 12 ausgebildet ist. Diese ist nach oben offen und somit gut reinigbar. Die Einleitung der Kühlflüssigkeit bzw. die Abnahme des Kühlflüssigkeitsfilms 11 von der Oberfläche des Kühlbandes 2 erfolgt mittels eines elastischen Schabers 13 (siehe Fig. 5), welcher schwimmend gelagert an dem Ablaufelement 12 befestigt ist, bevorzugterweise mittels einer Steckverbindung.

Die erfindungsgemäße Vorrichtung ist seitlich am Kühlband 2, 3 offen, es ist nicht erforderlich, den laminaren Kühlflüssigkeitsfilm 11 durch seitliche Stege oder Ähnliches auf dem Kühlband 2, 3 zu begrenzen, da kein seitliches Abschließen des laminaren Kühlflüssigkeitsfilms 11 erfolgt.

Erfindungsgemäß ergeben sich somit die folgenden Vorteile:
- kompakter und einfacher Aufbau, einfach zu fertigen
- Mediumauftrag in der Breite exakt und gerade begrenzt (Randbereich)
- CIP-fähig ohne zusätzliches Rohrleitungssystem, Temperaturbeständigkeit bei Reinigung
- Ausgleich von Unebenheiten im Kühlband ohne Funktionsbeeinträchtigung
- hoher Temperaturbereich möglich ohne Funktionsbeeinträchtigung
- Aufbringen einer möglichst großen Kühlwassermenge
- keine aufwändige Druck- bzw. Durchflussmengensteuer- bzw. regelung, keine aufwändige Düsenform
- Veränderbarkeit der Auftragemente von 30-100%, ohne dass das Auftragesystem tropft bzw. spritzt
- Schichtdicke gleichmäßig über die Breite
- hohe Funktionssicherheit, kein Energieverbrauch, (keine Geräuschentwicklung)
- keine Funktionsstörung bei trockenlaufendem Band
- schneller Austausch möglich, geringer Einstellaufwand
- keine Beschädigung des Stahlbandes, Standfestigkeit.

### Bezugszeichenliste

- 1: Lebensmittelmasse / Käseschmelze
- 2, 3: Kühlband
- 4: obere Umlenkwalze
- 5: untere Umlenkwalze
- 6: Band der Lebensmittelmasse
- 7: Kühlflüssigkeit
- 8: rohrförmiger Zuführkanal
- 9: Auslassröhre
- 10: laminarer Kühlflüssigkeitsstrahl
- 11: laminarer Kühlflüssigkeitsfilm
- 12: Ablasselement / Ablaufrinne
- 13, 14: Schaber
- 15, 16: Kolben
- 17: Ablauföffnung
- 18: Spindel
- 19: Anschlussrohr
- 20: Spindelgehäuse
- 21: Antriebsanschluss
- 22: Bohrung
- 23: Ausnehmung

## Patentansprüche

1. Form- und Kühlvorrichtung für eine fließfähige, aufgeschmolzene Lebensmittelmasse (1), insbesondere Schmelzkäse, mit zwei parallel gegeneinander umlaufenden, vertikal angeordneten Kühlbändern (2, 3), welche jeweils über eine obere (4) und eine untere (5) Umlenkwalze geführt und zur Bildung eines endlosen Bandes (6) der Lebensmittelmasse voneinander beabstandet sind, wobei die Kühlbänder (2, 3) auf der jeweils dem Band abgewandten Seite mit einer Kühlflüssigkeit (7) beaufschlagt werden, wobei am oberen Bereich des Kühlbandes (2, 3) jeweils ein Zuführkanal (8) ausgebildet ist, wobei unterhalb des Zuführkanals (8) ein Ablaufelement (12) zur Ableitung der Kühlflüssigkeit (7) angeordnet ist, wobei das Ablaufelement (12) in Form einer gegen die Horizontale geneigten Ablaufrinne ausgebildet ist **dadurch gekennzeichnet, dass** der Zuführkanal (8) rohrförmig ausgebildet ist und mit einer Vielzahl nebeneinander angeordneter Auslassröhren (9) versehen ist, welche in einem Winkel zur Oberfläche des Kühlbandes von 40° bis 60° geneigt angeordnet sind,
wobei die zentrischen Ausnehmungen der Auslassröhren (9) zylindrisch ausgebildet sind und wobei die Auslassröhren (9) zur Auflegung eines laminaren, nicht turbulenten Kühlflüssigkeitsstrahls (10) auf das Kühlband (2, 3) zur Ausbildung eines laminar an der Oberfläche ablaufenden Kühlflüssigkeitsfilms (11) ausgebildet sind, wobei das Ablaufelement (12) einen an der Innenseite des Kühlbandes (2, 3) anliegenden Schaber (13) umfasst, welcher elastisch gegen die Oberfläche des Kühlbandes (2, 3) vorgespannt ist, wobei der Schaber (13) bevorzugt mittels einer Steckverbindung an dem Ablaufelement (12) gelagert ist.

2. Vorrichtung nach Anspruch 1, **dadurch gekennzeichnet, dass** der Zuführkanal (8) ein Speichervolumen bildet.

3. Vorrichtung nach Anspruch 1 oder 2, **dadurch gekennzeichnet, dass** in dem Zuführkanal (8) ein Druck der Kühlflüssigkeit von 0,05 bar bis 0,3 bar vorliegt.

4. Vorrichtung nach einem der Ansprüche 1 bis 3, **dadurch gekennzeichnet, dass** die Auslassröhre (9) ein Verhältnis von Länge zu Durchmesser von 5 bis 9 aufweist.

5. Vorrichtung nach einem der Ansprüche 1 bis 4, **dadurch gekennzeichnet, dass** der Zuführkanal (8) mit einer Einstellvorrichtung versehen ist, mittels derer eine Zuleitung von Kühlflüssigkeit zu einzelnen der Auslassröhren (9) einstellbar ist.

6. Vorrichtung nach Anspruch 5, **dadurch gekennzeichnet, dass** die Einstellvorrichtung zumindest einen innerhalb des Zuführkanals (8) verschiebbar gelagerten Kolben (15, 16) umfasst, bevorzugt zwei in den Seitenbereichen des Zuführkanals (8) angeordnete Kolben (15, 16), welche zur Einstellung der wirksamen Zahl der Auslassröhren (9) mittels eines Antriebs verschiebbar sind.

7. Vorrichtung nach Anspruch 5 oder 6, **dadurch gekennzeichnet, dass** am seitlichen Endbereich des Zuführkanals (8) jeweils eine Ablauföffnung (17) ausgebildet ist.

## Claims

1. A shaping and cooling device for a flowable, melted food mass (1), in particular processed cheese, comprising two vertically disposed cooling bands (2, 3), which circulate against each other in parallel and which are each guided by means of an upper (4) and a lower (5) deflecting roller and which are spaced from each other in order to form a continuous strip (6) of the food mass, wherein the cooling bands (2, 3) are exposed to a cooling liquid (7) on the side facing away from the strip, wherein a supply channel (8) is formed on the upper area of the cooling band (2, 3), wherein a run-off element (12) for draining off the cooling liquid (7) is disposed underneath the supply channel (8), wherein the run-off element (12) is in the form of an outflow gutter slanted with respect to the horizontal, **characterized in that** the supply channel (8) is configured to be tubular and is provided with a plurality of outlet pipes (9) which are arranged next to each other and which are disposed slanted at an angle relative to the surface of the cooling band of 40° to 60°, wherein the central recesses of the outlet pipes (9) are made cylindrical and wherein the outlet pipes (9) are configured for applying a laminar, non-turbulent cooling-liquid jet (10) to the cooling band (2, 3) for forming a cooling-liquid film (11) running off in laminar fashion on the surface, wherein the run-off element (12) comprises a scraper (13) bearing against the inner surface of the cooling band (2, 3) and which is elastically preloaded against the surface of the cooling band (2, 3), wherein the scraper (13) is preferably supported at the run-off element (12) by way of a plug-and-socket connection.

2. The device according to claim 1, **characterized in that** the supply channel (8) forms a storage volume.

3. The device according to claim 1 or 2, **characterized in that** a pressure of the cooling liquid of 0.05 bar to 0.3 bar is prevailing in the supply channel (8).

4. The device according to one of claims 1 to 3, **characterized in that** the outlet pipe (9) has a ratio of length to diameter of 5 to 9.

5. The device according to one of claims 1 to 4, **characterized in that** the supply channel (8) is equipped with an adjusting device, by way of which a supply of cooling liquid to individual ones of the outlet pipes (9) is adjustable.

6. The device according to claim 5, **characterized in that** the adjusting device comprises at least one piston (15, 16) displaceably supported within the supply channel (8), preferably two pistons (15, 16) which are arranged in the lateral regions of the supply channel (8) and are displaceable for adjusting the effective number of the outlet pipes (9) by means of a drive.

7. The device according to claim 5 or 6, **characterized in that** a run-off opening (17) is respectively formed on the lateral end region of the supply channel (8).

## Revendications

1. Dispositif de formage et de refroidissement pour une composition alimentaire (1) fondue et coulante, en particulier du fromage fondu, comprenant deux bandes de refroidissement (2, 3) disposées verticalement et tournant parallèlement l'une à l'autre, lesquelles sont guidées respectivement au-dessus d'un cylindre de renvoi supérieur (4) et d'un cylindre de renvoi inférieur (5) et sont espacées l'une de l'autre pour former une bande sans fin (6) de la composition alimentaire, les bandes de refroidissement (2, 3) étant exposées, sur la face respectivement opposée à la bande, à un liquide de refroidissement (7), respectivement un canal d'amenée (8) étant formé sur la zone supérieure de la bande de refroidissement (2, 3), un élément d'écoulement (12) destiné à faire s'écouler le liquide de refroidissement (7) étant disposé au-dessous du canal d'amenée (8), l'élément d'écoulement (12) étant réalisé sous la forme d'une rigole d'écoulement inclinée par rapport à l'horizontale, **caractérisé en ce que** le canal d'amenée (8) est tubulaire et pourvu d'une pluralité de tuyaux de décharge (9) juxtaposés, lesquels sont disposés en inclinaison selon un angle de 40° à 60° avec la surface de la bande de refroidissement, les évidements centraux des tuyaux de décharge (9) étant cylindriques et les tuyaux de décharge (9) étant conçus pour appliquer un jet de liquide de refroidissement (10) laminaire non turbulent sur la bande de refroidissement (2, 3) de manière à former un film de liquide de refroidissement (11) s'écoulant de manière laminaire sur la surface, l'élément d'écoulement (12) comprenant un racloir (13) reposant sur la face intérieure de la bande de refroidissement (2, 3) et précontraint de manière élastique contre la surface de la bande de refroidissement (2, 3), le racloir (13) étant monté sur l'élément d'écoulement (12), de préférence au moyen d'un assemblage par emboîtement.

2. Dispositif selon la revendication 1, **caractérisé en ce que** le canal d'amenée (8) forme un volume de stockage.

3. Dispositif selon la revendication 1 ou 2, **caractérisé en ce qu'**une pression du liquide de refroidissement de 0,05 bar à 0,3 bar règne dans le canal d'amenée (8).

4. Dispositif selon l'une quelconque des revendications 1 à 3, **caractérisé en ce que** le tuyau de décharge (9) présente un rapport entre la longueur et le diamètre de 5 à 9.

5. Dispositif selon l'une quelconque des revendications 1 à 4, **caractérisé en ce que** le canal d'amenée (8) est pourvu d'un dispositif de réglage permettant de régler une amenée de liquide de refroidissement aux différents tuyaux de décharge (9).

6. Dispositif selon la revendication 5, **caractérisé en ce que** le dispositif de réglage comprend au moins un piston (15, 16) monté mobile à l'intérieur du canal d'amenée (8), de préférence deux pistons (15, 16) disposés dans les zones latérales du canal d'amenée (8) et mobiles au moyen d'un entraînement pour régler le nombre actif de tuyaux de décharge (9).

7. Dispositif selon la revendication 5 ou 6, **caractérisé en ce que** respectivement une ouverture d'écoulement (17) est ménagée sur la zone d'extrémité latérale du canal d'amenée (8).
